# EUROPÄISCHE PATENTANMELDUNG

(11) **EP 3 511 442 A1**
(43) Veröffentlichungstag der Anmeldung: **17.07.2019**
(21) Anmeldenummer: 18020117.0
(22) Anmeldetag: 27.03.2018
(51) Int. Cl.: C25B 1/00, C25B 1/10, C25B 9/08, C25B 15/08, B01D 53/22, C01B 32/40, C01B 3/50

(54) **HERSTELLUNG EINES KOHLENMONOXID ENTHALTENDEN GASPRODUKTS**

(30) Priorität: 12.01.2018 DE 102018000213
(71) Anmelder: Linde Aktiengesellschaft, 80331 München (DE)
(72) Erfinder: Peschel, Andreas, 82515 Wolfratshausen (DE); Hentschel, Benjamin, 80689 München (DE)
(74) Vertreter: Fischer, Werner

(57) **Zusammenfassung**

Die Erfindung betrifft ein Verfahren (100, 200, 300, 400) zur Herstellung eines zumindest Kohlenmonoxid enthaltenden Gasprodukts (D), bei dem ein zumindest Kohlendioxid, Wasser und Wasserstoff enthaltender Elektrolyseeinsatz einer Kathodenseite (12) einer Hochtemperatur-Elektrolysezelle (10) zugeführt und von der Kathodenseite (12) ein zumindest Wasser, Kohlendioxid, Kohlenmonoxid und Wasserstoff enthaltendes Elektrolyserohprodukt abgeführt wird. Zumindest ein Teil des Elektrolyserohprodukts oder ein unter Verwendung zumindest eines Teils des Elektrolyserohprodukts gebildetes und zumindest Kohlenmonoxid und Wasserstoff enthaltendes Gasgemischs wird als Trenneinsatz einer Membrantrennung (60, 62, 64) unterworfen, in der ein gegenüber dem Trenneinsatz an Wasserstoff an- und an Kohlenmonoxid abgereichertes Permeat und ein an Wasserstoff ab- und an Kohlenmonoxid angereichertes Retentat gebildet werden, wobei zumindest ein Teil des Permeats oder ein unter Verwendung zumindest eines Teils des Permeats gebildetes Gasgemisch bei der Bildung des Elektrolyseeinsatzes verwendet wird. Eine entsprechende Anlage ist ebenfalls Gegenstand der vorliegenden Erfindung

## Beschreibung

Die vorliegende Erfindung betrifft ein Verfahren zur Herstellung eines zumindest Kohlenmonoxid enthaltenden Gasprodukts und eine entsprechende Anlage gemäß den jeweiligen Oberbegriffen der unabhängigen Patentansprüche.

### Stand der Technik

Synthesegas ist ein überwiegend oder ausschließlich Kohlenmonoxid und Wasserstoff enthaltendes Gasgemisch. Synthesegas wird derzeit mittels unterschiedlicher Verfahren hergestellt, z.B. durch Dampfreformierung von Erdgas oder durch Vergasung von Einsatzstoffen wie Kohle, Erdöl oder Erdgas und eine sich jeweils anschließende Aufreinigung.

Wasserstoff kann auch mittels Wasserelektrolyse (beispielsweise mittels alkalischer Elektrolyse oder unter Einsatz einer Protonenaustauschmembran) hergestellt werden. Die Herstellung von Kohlenmonoxid ist mittels Hochtemperaturelektrolyse von Kohlendioxid möglich, wie beispielsweise in der WO 2013/131778 A2 offenbart. Durch Mischung entsprechend hergestellten Wasserstoffs und Kohlenmonoxids kann ebenfalls ein Synthesegas erhalten werden.

Eine weitere Möglichkeit zur Herstellung von Synthesegas stellt die Ko-Elektrolyse von Wasser und Kohlendioxid dar. Je nach dem verwendeten Elektrolyten und dem eingesetzten Katalysator existieren dabei unterschiedliche Ausgestaltungen, die sich insbesondere durch die Betriebstemperatur und die an den Elektroden ablaufenden elektrochemischen Reaktionen unterscheiden.

Bei der sogenannten Niedertemperatur-(NT-)Ko-Elektrolyse kann eine Protonenaustauschmembran (engl. Proton Exchange Membrane, PEM) eingesetzt werden. In diesem Fall laufen die folgenden Kathodenreaktionen ab:

CO₂+ 2 e⁻ + 2 H⁺ → CO + H₂O (1)

2 e⁻ + 2 H⁺ → H₂ (2)

Es läuft ferner folgende Anodenreaktion ab:

H₂O → ½ O₂ + 2 H⁺ - 2e- (3)

In Varianten entsprechender Verfahren können an der Anode anstelle von Protonen andere positive Ladungsträger wie Ionen eines Elektrolytsalzes gebildet, über eine entsprechend ausgestaltete Membran transportiert, und an der Kathode umgesetzt werden. Ein Beispiel für ein Elektrolytsalz ist Kaliumhydroxid. In diesem Fall handelt es sich bei den positiven Ladungsträgern um Kaliumionen. Weitere Varianten umfassen beispielsweise die Verwendung von Anionenaustauschmembranen (Anion Exchange Membranes, AEM). In sämtlichen Varianten erfolgt jedoch der Transport der Ladungsträger nicht, wie in den nachfolgend erläuterten Festoxid-Elektrolysezellen, in Form von Sauerstoffionen, sondern in Form der erläuterten Ladungsträger. Zu Details sei beispielsweise auf Delacourt et al. (2008), J. Electrochem. Soc. 155(1), B42-B49, DOI: 10.1149/1.2801871, verwiesen.

Die Protonen oder andere entsprechende Ladungsträger werden über eine Membran selektiv von der Anoden- zur Kathodenseite übertragen. An der Kathode konkurrieren dann, je nach gewähltem Katalysator, die jeweiligen Bildungsreaktionen, so dass sich Synthesegase mit unterschiedlichen Wasserstoff/Kohlenmonoxid-Verhältnissen ergeben. Je nach Ausgestaltung des verwendeten Katalysators können bei der Niedertemperatur-Ko-Elektrolyse auch andere Wertprodukte gebildet werden.

Bei der Hochtemperatur-(HT-)Ko-Elektrolyse, die unter Verwendung von Festoxid-Elektrolysezellen (engl. Solid Oxide Electrolysis Cell, SOEC) durchgeführt wird, werden die folgenden Kathodenreaktionen beobachtet bzw. postuliert:

CO₂+ 2e⁻ → CO + O²⁻ (4)

H₂O + 2e⁻ → H₂ + O²⁻ (5)

Es laufen ferner folgende Anodenreaktion ab:

2 O²⁻ → O₂ + 4 e⁻ (6)

Die Sauerstoffionen werden hierbei im Wesentlichen selektiv über eine keramische Membran von der Kathodenseite zur Anodenseite geleitet.

Es ist nicht vollständig geklärt, ob die Reaktion gemäß Reaktionsgleichung 4 in der dargestellten Weise abläuft. Es ist auch möglich, dass lediglich Wasserstoff elektrochemisch gebildet wird und Kohlenmonoxid sich entsprechend der umgekehrten Wassergas-Shiftreaktion in Anwesenheit von Kohlendioxid bildet:

CO₂+ H₂ = H₂O + CO (7)

In der Regel befindet sich das bei der Hochtemperatur-Ko-Elektrolyse gebildete Gasgemisch im Wassergas-Shift-Gleichgewicht (oder nahe bei diesem). Auf die vorliegende Erfindung hat die konkrete Art und Weise der Bildung des Kohlenmonoxids jedoch keinen Einfluss.

Weder bei der Hoch- noch bei der Niedertemperatur-Ko-Elektrolyse erfolgt i.d.R. ein vollständiger Umsatz von Kohlendioxid und Wasser, weshalb anschließend eine Abtrennung von Kohlendioxid erfolgen muss. Das Kohlendioxid kann zur Elektrolyse rezykliert werden. Das nach einer entsprechenden Abtrennung erhaltene Produkt ist ein Synthesegas mit je nach eingesetztem Katalysator unterschiedlichem Wasserstoff/Kohlenmonoxid-Verhältnis.

Die Elektrolyse von Kohlendioxid mittels Festoxid-Elektrolysezellen ist beispielsweise in der WO 2014/154253 A1, der WO 2013/131778 A2, der WO 2015/014527 A1 und der EP 2 940 773 A1 beschrieben. Hierbei ist auch eine analoge Prozessführung für die Ko-Elektrolyse und eine entsprechende Herstellung von Synthesegas erwähnt. In den genannten Druckschriften ist ferner eine Trennung von Kohlendioxid und Kohlenmonoxid unter Verwendung von Absorptions-, Adsorptions-, Membran- und kryogenen Trennverfahren offenbart, jedoch werden keine Details zur konkreten Ausgestaltung und insbesondere zu einer Kombination der Verfahren angegeben.

Die Ko-Elektrolyse von Kohlendioxid mittels Festoxid-Elektrolysezellen zu Synthesegas ist bisher nur im Labormaßstab beschrieben worden. Es wird insbesondere auf einen entsprechenden Artikel von Foit et al. (2016), Angew. Chem. 129 (20), Seiten 5488 bis 5498, DOI: 10.1002/ange.201607552, verwiesen.

Es wurde erkannt, dass in einer Hochtemperatur-Elektrolyse vorteilhafterweise reduzierende Bedingungen verwendet werden sollten, insbesondere um die verwendeten nickelhaltigen Katalysatoren vor Oxidation zu schützen. Vor allem am Eintritt einer Hochtemperatur-Elektrolysezelle, die für die Hochtemperatur-Ko-Elektrolyse eingesetzt wird, ist dies herkömmlicherweise jedoch nicht der Fall.

Die vorliegende Erfindung stellt sich daher die Aufgabe, verbesserte Maßnahmen zur Herstellung reduzierender Bedingungen in einem einer Hochtemperatur-Elektrolyse zugeführten Gasgemisch, insbesondere zum Schutz vor Nickeloxidation, anzugeben. Insbesondere soll dabei Wasserstoff in ein entsprechendes Gasgemisch ohne Verwendung extern bereitgestellten Wasserstoffs bereitgestellt werden.

### Offenbarung der Erfindung

Vor diesem Hintergrund schlägt die vorliegende Erfindung ein Verfahren zur Herstellung eines zumindest Kohlenmonoxid enthaltenden Gasprodukts und eine entsprechende Anlage mit den Merkmalen der jeweiligen unabhängigen Patentansprüche vor. Bevorzugte Ausgestaltungen sind jeweils Gegenstand der abhängigen Patentansprüche sowie der nachfolgenden Beschreibung.

Vor der Erläuterung der Vorteile der vorliegenden Erfindung sollen nachfolgend weitere Grundlagen erläutert und hier verwendete Begriffe definiert werden.

Unter einem "zumindest Kohlenmonoxid enthaltenden Gasprodukt" wird hier insbesondere Kohlenmonoxid unterschiedlicher Reinheiten oder aber Synthesegas oder ein vergleichbares Gasgemisch, also ein Gasgemisch, das neben Kohlenmonoxid zumindest auch nennenswerte Mengen an Wasserstoff enthält, verstanden.

Beispielsweise kann das zumindest Kohlenmonoxid enthaltende Gasprodukt Wasserstoff und Kohlenmonoxid in gleichen oder vergleichbaren Anteilen enthalten. Das molare Verhältnis von Wasserstoff zu Kohlenmonoxid in dem Gasprodukt kann insbesondere in einem Bereich von 1:10 bis 10:1, 2:8 bis 8:2 oder 4:6 bis 6:4 liegen, wobei der Molanteil von Wasserstoff und Kohlendioxid gemeinsam bei über 50%, 60%, 70%, 80%, 90%, 95% oder 99% liegen kann und ein etwaiger verbleibender Rest insbesondere aus Kohlendioxid oder sich inert verhaltenden Gasen wie Stickstoff oder Edelgasen der Luft gebildet sein kann. Das molare Verhältnis von Wasserstoff zu Kohlenmonoxid in dem Gasprodukt kann insbesondere bei ca. 1 oder ca. 2 oder ca. 3 liegen, die Stöchiometriezahl insbesondere bei ca. 2. Die Stöchiometriezahl SN drückt die Zusammensetzung des Synthesegases hinsichtlich der Komponenten Wasserstoff, Kohlendioxid und Kohlenmonoxid aus, wobei jeweils Stoffmengenanteile x betrachtet werden. Sie berechnet sich zu SN = (xH2 - xCO2) / (xCO + xCO2).

Liegt in dem Rohgas kein oder wenig Wasserstoff vor, ist auch das Gasprodukt entsprechend arm an oder frei von Wasserstoff, es handelt sich also um ein an Kohlenmonoxid reiches Gasprodukt bzw. reines Kohlenmonoxid.

Ein in der Hochtemperatur-Ko-Elektrolyse gebildetes Elektrolyserohprodukt, d.h. ein Gasgemisch, das direkt der Kathodenseite einer entsprechenden Elektrolysezelle entnommen wird, kann im nichtwässrigen Anteil (d.h. "trocken") insbesondere einen Gehalt von 0 bis 80% Wasserstoff, 10 bis 90% Kohlenmonoxid und 10 bis 80% Kohlendioxid aufweisen.

Generell können Stoffströme, Gasgemische usw. im hier verwendeten Sprachgebrauch reich oder arm an einer oder mehreren Komponenten sein, wobei die Angabe "reich" für einen Gehalt von wenigstens 50%, 60%, 75%, 80%, 90%, 95%, 98%, 99%, 99,5%, 99,9% oder 99,99% und die Angabe "arm" für einen Gehalt von höchstens 50%, 40%, 25%, 20%, 10%, 5%, 2%, 1%, 0,5%, 0,1% oder 0,01% auf molarer, Gewichts- oder Volumenbasis stehen kann. Sind mehrere Komponenten angegeben, bezieht sich die Angabe "reich" oder "arm" auf die Summe aller Komponenten. Ist hier beispielsweise von "Kohlenmonoxid" die Rede, kann es sich um ein Reingas, aber auch ein an Kohlenmonoxid reiches Gemisch handeln. Ein Gasgemisch, das "überwiegend" eine oder mehrere Komponenten enthält, ist insbesondere reich an dieser oder diesen im erläuterten Sinn.

Stoffströme, Gasgemische usw. können im hier verwendeten Sprachgebrauch außerdem "angereichert" oder "abgereichert" an einer oder mehreren Komponenten sein, wobei sich diese Begriffe auf einen Gehalt in einem Ausgangsgemisch beziehen. Sie sind "angereichert", wenn sie zumindest den 1,1-fachen, 1,5-fachen, 2-fachen, 5-fachen, 10-fachen, 100-fachen oder 1.000-fachen Gehalt, "abgereichert", wenn sie höchstens den 0,9-fachen, 0,75-fachen, 0,5-fachen, 0,1-fachen, 0,01-fachen oder 0,001-fachen Gehalt einer oder mehrerer Komponenten, bezogen auf das Ausgangsgemisch, enthalten.

Unter einem "Permeat" wird im Rahmen der vorliegenden Anmeldung ein Gemisch verstanden, das überwiegend oder ausschließlich Komponenten aufweist, die von einer in einer Membrantrennung eingesetzten Membran nicht oder überwiegend nicht zurückgehalten werden, die also die Membran (im Wesentlichen oder zumindest bevorzugt) ungehindert passieren. Im Rahmen der Erfindung werden insbesondere Membranen eingesetzt, die Wasserstoff im Gegensatz zu schwereren Komponenten, insbesondere Kohlenmonoxid, bevorzugt passieren lassen. Auf diese Weise wird das Permeat an Wasserstoff angereichert. Bei einer entsprechenden Membran handelt sich beispielsweise um eine kommerzielle Polymermembran, welche großtechnisch zur Abtrennung von Kohlendioxid und/oder Wasserstoff eingesetzt werden.

Entsprechend handelt es sich bei einem "Retentat" um ein Gemisch, das überwiegend Komponenten aufweist, die von der in der Membrantrennung eingesetzten Membran vollständig oder zumindest überwiegend zurückgehalten werden. Das im Rahmen der vorliegenden Erfindung betrachtete Retentat ist insbesondere an Wasserstoff ab- und an zumindest einer schwereren Verbindung angereichert.

### Vorteile der Erfindung

Wie erwähnt ist es vorteilhaft, eine Hochtemperatur-Ko-Elektrolyse unter reduzierenden Bedingungen durchzuführen, um eine Oxidation des verwendeten, insbesondere nickelhaltigen, Katalysators in der Elektrolysezelle zu vermeiden. Grundsätzlich kann hierzu Wasserstoff zu einem der Hochtemperatur-Ko-Elektrolyse unterworfenen Gasgemisch zudosiert werden. Durch eine derartige Zudosierung können entsprechende Materialprobleme vermieden werden. Allerdings ist eine externe Bereitstellung von Wasserstoff hierzu aufwendig und teuer.

Im Rahmen der vorliegenden Erfindung wurde es nun als besonders vorteilhaft erkannt, den in einem Einsatzgemisch für eine Hochtemperatur-Ko-Elektrolyse verwendeten Wasserstoff zumindest teilweise durch Abtrennen aus dem Elektrolyserohprodukt oder aus einem weiteren Gasgemisch, das unter Verwendung zumindest eines Teils des Elektrolyserohprodukts gebildet wird, bereitzustellen.

Das der Hochtemperatur-Elektrolysezelle zugeführte Gasgemisch wird dabei im Rahmen der vorliegenden Anmeldung als "Elektrolyseeinsatz" bezeichnet. Es enthält aufgrund der Verwendung der erfindungsgemäß vorgeschlagenen Maßnahmen Wasserstoff sowie ferner zumindest Kohlendioxid und Wasser.

Wasserstoff kann aus dem Elektrolyserohprodukt oder dem unter Verwendung zumindest eines Teils des Elektrolyserohprodukts gebildeten weiteren Gasgemisch über Polymermembranen durch Anlegen eines Partialdruckunterschiedes abgetrennt werden, wobei die Selektivität der verwendeten Membran aus unterschiedlichen Diffusionsgeschwindigkeiten der Gaskomponenten durch die Membran resultiert. Entsprechende Polymermembranen werden kommerziell eingesetzt.

Alternativ zu einer derartigen partialdruckgetriebenen Wasserstoffabtrennung kann auch ein elektrisches Potential über eine protonenleitende Membran als Triebkraft genutzt werden. Hierzu wird Wasserstoff auf der Retentatseite mittels eines geeigneten Katalysators reduziert und als Proton entlang des angelegten elektrischen Potentials über die Membran transportiert. Auf der Permeatseite der Membran wird unter Kombination des Protons mit Elektronen aus dem äußeren Stromkreis wieder molekularer Wasserstoff erhalten.

Neben einer Niedertemperatur-(NT-)Membrantrennung über Polymermembranen kann auch eine Hochtemperatur-(HT-)Membrantrennung zur Abtrennung von Wasserstoff eingesetzt werden, welche sowohl über einen Partialdruckunterschied als auch über ein elektrisches Potential betrieben werden kann. Hochtemperatur-Membranen zur Verwendung in einem entsprechenden Verfahren sind meist metallischer (z. B. Palladium), keramischer (Festoxide) oder hybrider Natur (Palladium-Komposit). Entsprechende Membranen sind beispielsweise in der Encyclopedia of Membrane Science and Technology, DOI: 10.1002/9781118522318.emst095, oder bei G.S. Burkhanov et al., "Palladium-Based Alloy Membranes for Separation of High Purity Hydrogen from Hydrogen-Containing Gas Mixtures", Platinum Metals Rev., 2011, 55, Seiten 3 bis 12 beschrieben.

Die vorliegende Erfindung besteht in einem zentralen Aspekt in einer Kombination aus einer Hochtemperatur-Ko-Elektrolyse von Kohlendioxid und Wasserstoff mit einer Membrantrennung zur Wasserstoffabtrennung. Der abgetrennte Wasserstoff kann gezielt zur Elektrolyse zurückgeführt werden. Die verwendeten Membranen können, wie auch nachfolgend noch erläutert, unterschiedlich ausgestaltet werden.

Durch den Einsatz der vorliegenden Erfindung ergibt sich der Vorteil, dass in einem entsprechenden Elektrolyseeinsatz reduzierende Bedingungen geschaffen werden und damit insbesondere eine Nickeloxidation vermieden werden kann. Durch die Bereitstellung des Wasserstoffs mittels der erfindungsgemäß vorgeschlagenen Maßnahmen kann ein entsprechender Elektrolyseeinsatz ohne externen Wasserstoffimport durchgeführt werden.

Insbesondere wird im Rahmen der vorliegenden Erfindung eine absorptive, destillative oder kondensative Kohlendioxidabtrennung ermöglicht, die, wie auch unten erläutert, unter gewissen Umständen einfacher und kostengünstiger ist als adsorptive Verfahren oder Membranverfahren. Bei einer absorptiven Kohlendioxidabtrennung wird eine vergleichsweise reine, jedenfalls aber kaum oder keinen Wasserstoff aufweisende Kohlendioxidfraktion gewonnen, die daher für sich betrachtet nicht zur Bereitstellung von Wasserstoff in einem Elektrolyseeinsatz geeignet ist. Durch das im Rahmen der vorliegenden Erfindung verwendete Membranverfahren ist jedoch entsprechender Wasserstoff bereitstellbar.

Die (insbesondere absorptive, destillative oder kondensative) Kohlendioxidabtrennung kann dabei stromab oder auch stromauf der erfindungsgemäß vorgeschlagenenen Membrantrennung eingesetzt werden. Da eine entsprechende Kohlendioxidabtrennung in bestimmten Ausgestaltungen der vorliegenden Erfindung auf einem geringeren Druckniveau durchgeführt wird als die Membrantrennung, kann durch den Einsatz einer Kohlendioxidabtrennung stromauf der Membrantrennung Verdichtungsenergie eingespart werden, weil durch die Entfernung des Kohlendioxids stromauf der Membrantrennung nur noch ein geringeres Gasvolumen auf den hohen Druck der Membrantrennung gebracht werden muss.

Insgesamt schlägt die vorliegende Erfindung ein Verfahren zur Herstellung eines zumindest Kohlenmonoxid enthaltenden Gasprodukts vor. Neben dem Kohlenmonoxid kann ein entsprechendes Gasprodukt auch Wasserstoff aufweisen, wie erwähnt. Mit anderen Worten kann das erfindungsgemäße Verfahren insbesondere zur Herstellung eines Synthesegasprodukts, wie es eingangs erläutert wurde, verwendet werden. Das erfindungsgemäße Verfahren umfasst dabei, einen zumindest Kohlendioxid, Wasser und Wasserstoff enthaltenden Elektrolyseeinsatz zu bilden und einer Kathodenseite einer Hochtemperatur-Elektrolysezelle zuzuführen.

Erfindungsgemäß wird von der Kathodenseite der Hochtemperatur-Elektrolysezelle ein zumindest Wasser, Kohlendioxid, Kohlenmonoxid und Wasserstoff enthaltendes Elektrolyserohprodukt abgeführt. Ein derartiger Betrieb einer Hochtemperatur-Elektrolysezelle wurde bereits in der Einleitung ausführlich erläutert. Die Anodenseite einer entsprechenden Elektrolysezelle wird typischerweise mit Luft gespült, wie dies auch im Rahmen der vorliegenden Erfindung erfolgen kann. Auf diese Weise können hier gebildete Elektrolyseprodukte, insbesondere Sauerstoff, abtransportiert werden.

Die vorliegende Erfindung umfasst, dass zumindest ein Teil des Elektrolyserohprodukts oder ein unter Verwendung zumindest eines Teils des Elektrolyserohprodukts gebildetes und zumindest Kohlenmonoxid und Wasserstoff enthaltendes Gasgemisch, hier als "weiteres Gasgemisch" bezeichnet, als Trenneinsatz einer Membrantrennung unterworfen wird, in der ein gegenüber dem Trenneinsatz an Wasserstoff an- und an Kohlenmonoxid abgereichertes Permeat sowie ein an Wasserstoff ab- und an Kohlenmonoxid angereichertes Rententat gebildet werden.

Wie auch nachfolgend erläutert, kann das weitere Gasgemisch bzw. der Trenneinsatz auch Kohlendioxid enthalten, sofern dieses nicht bereits stromauf entfernt wurde. Das in dem Elektrolyserohprodukt bzw. dem weiteren Gasgemisch in diesem Fall enthaltene Kohlendioxid verteilt sich bei Einsatz bestimmter Membrantypen, insbesondere einer Polymermembran, zwischen Permeat und Retentat, wobei aber die Membrantrennung derart ausgeführt werden kann, dass kein Kohlenmonoxid in signifikanten Mengen in das Permeat übergeht. Ist dies nicht möglich, kann auch eine zweistufige Membrantrennung eingesetzt werden. Bei Einsatz anderer Membrantypen, beispielsweise einer Palladiummembran, kann Wasserstoff selektiv oder nahezu selektiv abgetrennt werden.

Erfindungsgemäß wird zumindest ein Teil des Permeats oder ein unter Verwendung zumindest eines Teils des Permeats gebildetes Gasgemisch, also insbesondere ein an Wasserstoff angereichertes Permeat oder Wasserstoff aus einem derartigen Permeat, bei der Bildung des Elektrolyseeinsatzes verwendet. Auf diese Weise können die erfindungsgemäßen Vorteile erzielt werden, die, wie erläutert, insbesondere darin bestehen, dass für die Durchführung einer entsprechenden Hochtemperatur-Ko-Elektrolyse unter reduzierenden Bedingungen zur Vermeidung einer Nickeloxidation kein externer Wasserstoff zugeführt werden muss. Dies schließt nicht aus, dass bestimmte Mengen des gebildeten und abgetrennten Wasserstoffs in anderer Weise verwendet werden, beispielsweise als Wasserstoffprodukt.

Wie erwähnt, kann die Bildung des Gasgemischs, das als Trenneinsatz der Membrantrennung unterworfen wird, eine zumindest teilweise Abtrennung von Kohlendioxid aus dem Elektrolyserohprodukt oder einem Teil hiervon umfassen. In dieser Ausgestaltung wird der bereits erwähnte Vorteil erzielt, dass eine geringere Gasmenge auf das vergleichsweise hohe Druckniveau der Membrantrennung gebracht werden muss. Das entsprechend abgetrennte Kohlendioxid kann zumindest teilweise zur Hochtemperatur-Elektrolysezelle zurückgeführt werden. Alternativ ist aber auch möglich, dass der Trenneinsatz noch Kohlendioxid enthält, also dass keine oder zumindest keine vollständige Kohlendioxidabtrennnung stromauf der Membrantrennung durchgeführt wird.

Gemäß einer besonders bevorzugten Ausgestaltung der vorliegenden Erfindung wird die Membrantrennung auf einem Temperaturniveau von -40 bis 100 °C, bevorzugt 20 bis 80°C, durchgeführt, und der der Membrantrennung zugeführte Trenneinsatz wird unter Verwendung zumindest eines Teils des Elektrolyserohprodukts gebildet, das einer Abkühlung und Entfernung von Wasser unterworfen wird.

Im Rahmen der soeben erläuterten Ausführungsform der vorliegenden Erfindung wird vorteilhafterweise eine polymerbasierte Membran eingesetzt, und es erfolgt eine Abtrennung von Wasserstoff bzw. eine entsprechende Bildung eines an Wasserstoff angereicherten Permeats stromab einer Verdichtung des Elektrolyserohprodukts oder eines aus diesem gebildeten Gasgemischs, insbesondere in einem an sich bekannten sogenannten Rohgasverdichter. Im Zuge dieser Verdichtung kann insbesondere auch Kondensat abgeschieden und zurückgeführt werden.

Ein entsprechend verdichtetes Gasgemisch wird dabei insbesondere bei einer Temperatur zwischen 20 und 80 °C in ein Membranmodul gegeben, das die zuvor erläuterte An- bzw. Abreicherung vornimmt. Der auf diese Weise gebildete Permeatstrom liegt auf einem geringeren Druckniveau als der entsprechende Retentatstrom vor, allerdings typischerweise auf einem höheren Druckniveau als jenem, auf dem die Hochtemperatur-Elektrolysezelle betrieben wird. Daher kann ein entsprechendes Permeat insbesondere auch ohne zusätzlichen Verdichter zur Hochtemperatur-Elektrolysezelle rezykliert werden.

In der erläuterten Ausgestaltung beträgt ein Einspeisedruckniveau in die erläuterte Membrantrennung insbesondere 5 bis 50 bar (abs.), vorzugsweise 20 bis 40 bar (abs.) und der Entnahmedruck des Permeats insbesondere 1 bis 10 bar (abs.), vorzugsweise 2 bis 5 bar (abs.). Der Elektrolysedruck, also der Druck, bei dem die Hochtemperatur-Ko-Elektrolyse kathodenseitig in der Hochtemperatur-Elektrolysezelle durchgeführt wird, beträgt im Rahmen der Erfindung insbesondere 1 bis 20 bar (abs.), vozugsweise 2 bis 10 bar (abs.).

Alternativ zu der soeben erläuterten Ausgestaltung der Erfindung kann auch auf eine Verdichtung vor der Membrantrennung verzichtet werden, wenn die Membrantrennung auf einem geringeren Druckniveau als die Hochtemperatur-Elektrolysezelle betrieben wird. Dies kann insbesondere dann der Fall sein, wenn die Membrantrennung wie nachfolgend erläutert durchgeführt wird. In entsprechenden Fällen muss jedoch der rückgeführte Strom entsprechend verdichtet werden.

Im Rahmen der vorliegenden Erfindung können grundsätzlich unterschiedliche Membrantrennverfahren verwendet werden. Diese wurden bereits zuvor erläutert. So kann gemäß einer Ausgestaltung der vorliegenden Erfindung eine Membrantrennung eingesetzt werden, deren Triebkraft überwiegend oder ausschließlich durch ein Partialdruckgefälle über eine oder mehrere in der Membrantrennung eingesetzte Membranen eingestellt wird. In diesem Fall erfordert das Bilden des der Membrantrennung zugeführten Trenneinsatzes insbesondere eine entsprechende Verdichtung, insbesondere auf ein oben erwähntes Druckniveau. Bei dieser Verfahrensvariante handelt es sich also um ein klassisches Membrantrennverfahren, das insbesondere ohne Verwendung einer elektrischen Spannung durchgeführt wird.

Alternativ oder zusätzlich ist es jedoch auch möglich, eine Membrantrennung einzusetzen, deren Triebkraft überwiegend oder ausschließlich durch ein elektrisches Spannungsgefälle über eine oder mehrere in der Membrantrennung verwendete Membranen eingestellt wird. Der besondere Vorteil einer entsprechenden Verfahrensvariante ist der, dass hier stromauf der Membrantrennung keine Verdichtung des der Membrantrennung zugeführten Gasgemischs erfolgen muss. Dieses kann vielmehr der Membrantrennung auf einem deutlich geringeren Druckniveau zugeführt werden, und es muss anschließend nur das Retentat für die nachfolgende Verwendung weiterverdichtet werden. Alternativ kann jedoch auch eine derartige Verfahrensvariante derart durchgeführt werden, dass das der Membrantrennung zugeführte Gasgemisch entsprechend verdichtet wird. Das Druckniveau der Membrantrennung, also deren Eingangsdruck, kann grundsätzlich bei 1 bis 50 bar, beispielsweise bei 1,3 bis 10 bar liegen.

Ein entsprechend gebildetes Retentat kann noch Kohlenmonoxid enthalten, das sich insbesondere zwischen Permeat und Retentat verteilen kann, da es weder vollständig in das Permeat noch vollständig in das Retentat übergeht. Daher kann gemäß einer besonders bevorzugten Ausführungsform der vorliegenden Erfindung vorgesehen sein, dass zumindest ein Teil des Permeats oder ein unter Verwendung zumindest eines Teils des Permeats gebildetes Gasgemisch als weiterer Trenneinsatz einer weiteren Membrantrennung unterworfen wird.

In der weiteren Membrantrennung können ein weiteres Permeat und ein weiteres Retentat gebildet werden, wobei das weitere Permeat gegenüber dem weiteren Trenneinsatz an Kohlenmonoxid abgereichert ist, und wobei zumindest ein Teil des weiteren Permeats oder ein Gasgemisch, das unter Verwendung zumindest eines Teils des weiteren Permeats gebildet wird, stattdessen bei der Bildung des Elektrolyseeinsatzes verwendet wird. Das weitere Permeat kann insbesondere frei oder im Wesentlichen frei von Kohlenmonoxid sein.

Durch eine Abreicherung des Permeats an Kohlenmonoxid kann sichergestellt werden, dass bekannte Hochtemperaturkorrosionsprobleme, die bei erhöhten Kohlenmonoxidgehalten und hohen Temperaturen in Metallapparaturen auftreten können (sogenanntes "Metal Dusting") vermieden werden können.

In der erläuterten Ausgestaltung der vorliegenden Erfindung wird vorteilhafterweise das in der weiteren Membrantrennung gebildete weitere Retentat bzw. ein Teil davon nach stromab der Elektrolysezelle zurückgeführt, und zwar insbesondere vor die (erste) Membrantrennung, insbesondere vor eine entsprechende Verdichtung. Das weitere Retentat oder ein Teil hiervon wird also, mit anderen Worten, zumindest teilweise mit zumindest einem Teil des Elektrolyserohprodukts oder mit zumindest einem Teil eines aus dem Elektrolyserohprodukt gebildeten Gasgemischs vereinigt.

Das Kohlenmonoxid in dem weiteren Retentat kann auf diese Weise in das Gasprodukt überführt werden. Durch den Einsatz der soeben erläuterten Verfahrensvariante können die erläuterten Probleme vermieden werden. Es ist jedoch grundsätzlich erforderlich, das Permeat zur Bildung des weiteren Trenneinsatzes in einem zusätzlichen Verdichter zu verdichten.

Gemäß einer alternativen Ausgestaltung der vorliegenden Erfindung kann die Membrantrennung auch in Form einer Hochtemperatur-Membrantrennung durchgeführt werden, wie sie ebenfalls zuvor bereits erwähnt wurde. Bei dieser Ausgestaltung der vorliegenden Erfindung wird die Membrantrennung auf einem ersten Temperaturniveau von mehr als 200 °C oder mehr als 500 °C, insbesondere von 300 bis 1.000 °C oder 500 bis 900 °C betrieben, wobei die Hochtemperatur-Elektrolysezelle auf diesem ersten Temperaturniveau betrieben wird, oder wobei die Hochtemperatur-Elektrolysezelle auf einem zweiten Temperaturniveau oberhalb des ersten Temperaturniveaus betrieben wird und das Elektrolyserohprodukt auf das zweite Temperaturniveau abgekühlt wird.

Vorteilhafterweise befindet sich das in der Hochtemperatur-Membrantrennung eingesetzte Temperaturniveau dabei deutlich oberhalb der Verkokungstemperatur gemäß dem Boudouard-Gleichgewicht. Mit anderen Worten kann hier eine Anpassung der Temperaturniveaus der Hochtemperatur-Ko-Elektrolyse und der Hochtemperatur-Membrantrennung erfolgen. Um ein für diese Ausgestaltung erforderliches Druckniveau zu erreichen, ist die vorgestellte Verfahrensvariante typischerweise nur für entsprechend höhere Elektrolysedrücke in der Elektrolysezelle vorteilhaft.

Das Druckniveau, auf dem die Hochtemperatur-Membrantrennung betrieben wird, beträgt hierbei insbesondere 5 bis 50 bar, vorzugsweise 10 bis 20 bar. Ein entsprechendes Druckniveau oder ein nochmals höheres Druckniveau wird in der Hochtemperatur-Elektrolyse verwendet.

Auch bei der Durchführung einer Hochtemperatur-Membrantrennung erfolgen eine Abkühlung und eine Entfernung von Wasser, die jedoch im Falle der Hochtemperatur-Membrantrennung erst in dem Retentat und nicht wie zuvor in dem Elektrolyserohprodukt vorgenommen werden.

In sämtlichen Fällen kann zur Energierückgewinnung die Abkühlung und die Entfernung von Wasser einen Wärmeaustausch mit einem zur Bereitstellung von Dampf verwendeten Wasser- oder Dampfstrom umfassen. Auf diese Weise gebildeter Dampf kann dabei insbesondere zur Bereitstellung des Elektrolyseeinsatzes verwendet, also der Hochtemperatur-Ko-Elektrolyse unterworfen werden. In jedem Fall wird dabei vorteilhafterweise sichergestellt, dass die Metalltemperaturen eines entsprechenden Wärmetauschers ein vorgegebenes Temperaturniveau nicht überschreiten, so dass keine Korrosionsprobleme auftreten. Das Temperaturniveau liegt vorteilhafterweise bei weniger als 500 °C, insbesondere weniger als 400 °C oder weniger als 300 °C.

Gemäß einer besonders bevorzugten Ausgestaltung der vorliegenden Erfindung wird aus zumindest einem Teil des Retentats Kohlendioxid abgetrennt und zumindest teilweise bei der Bereitstellung des Elektrolyseeinsatzes verwendet. Dies kann dann erfolgen, wenn Kohlendioxid nicht bereits zuvor, d.h. stromauf der Membrantrennung, vollständig abgetrennt wurde. Eine derartige Kohlendioxidabtrennung kann grundsätzlich membran-, adsorptions- und/oder absorptionsbasiert erfolgen. Auch der Einsatz einer destillativen und/oder kondensativen Kohlendioxidabtrennung ist möglich. Ein besonderer Vorteil der vorliegenden Erfindung besteht dabei in der Möglichkeit, einen absorptiven, destillativen oder kondensativen Kohlendioxidentfernungsschritt zu verwenden. Wie erwähnt, kann hierbei eine reine oder im Wesentlichen reine Kohlendioxidfraktion gewonnen werden, da rückzuführender Wasserstoff in der erfindungsgemäßen Membrantrennung abgetrennt werden kann.

Besonders bei absorptiven, destillativen und kondensativen Verfahren zur Kohlendioxidabtrennung resultiert meist ein sehr reiner Kohlendioxidstrom. Mit diesem kann daher kein Wasserstoff in die Hochtemperatur-Ko-Elektrolyse eingebracht werden. Entsptrechender Wasserstoff kann jedoch durch die erfindungsgemäß eingesetzte Membrantrennung bereitgestellt werden.

Die absorptive, destillative oder kondensative Kohlendioxidabtrennung ermöglicht eine Bearbeitung auch großer Gasvolumina in kostengünstiger und energiesparender Weise, da typischerweise die Investitionskosten einer absorptiven, destillativen oder kondensativen Abtrennung für größere Produktmengen besser skalieren als bei membran- oder adsorptionsbasierten Konzepten. Daher besteht ein wesentlicher Aspekt der vorliegenden Erfindung auch in einer membranbasierten Wasserstoffabtrennung, gekoppelt mit einer absorptiven, destillativen oder kondensativen Kohlendioxidabtrennung. Insbesondere die Kombination dieser beiden Trennverfahren ermöglicht ein besonders kostengünstiges und energetisch vorteilhaft durchführbares Verfahren.

Die vorliegende Erfindung erstreckt sich, wie erwähnt, auch auf eine Anlage zur Herstellung eines zumindest Kohlenmonoxid enthaltenden Gasprodukts, zu deren Merkmalen ausdrücklich auf den entsprechenden unabhängigen Vorrichtungsanspruch verwiesen wird. Insbesondere ist eine entsprechende Anlage zur Durchführung eines Verfahrens eingerichtet, wie es zuvor in unterschiedlichen Ausgestaltungen erläutert wurde. Auf diese und die damit verbundenen Vorteile wird daher in diesem Zusammenhang ausdrücklich verwiesen.

Die Erfindung wird nachfolgend unter Bezugnahme auf die beigefügten Zeichnungen näher erläutert, welche bevorzugte Ausführungsformen der vorliegenden Erfindung veranschaulichen.

### Kurze Beschreibung der Zeichnungen

Figur 1 veranschaulicht eine Anlage gemäß einer Ausführungsform der Erfindung in schematischer Darstellung.
Figur 2 veranschaulicht eine Anlage gemäß einer Ausführungsform der Erfindung in schematischer Darstellung.
Figur 3 veranschaulicht eine Anlage gemäß einer Ausführungsform der Erfindung in schematischer Darstellung.
Figur 4 veranschaulicht eine Anlage gemäß einer Ausführungsform der Erfindung in schematischer Darstellung.

### Ausführliche Beschreibung der Zeichnungen

In den nachfolgenden Figuren sind Anlagen gemäß bevorzugter Ausführungsformen der vorliegenden Erfindung veranschaulicht. Dabei sind technische gleichwirkende bzw. äquivalente Komponenten mit identischen Bezugszeichen angegeben und werden der Übersichtlichkeit halber nicht wiederholt erläutert. Entsprechende Komponenten können in den veranschaulichten Ausführungsformen grundsätzlich gleich oder unterschiedlich dimensioniert und beispielsweise an abweichende Stoffmengen angepasst werden.

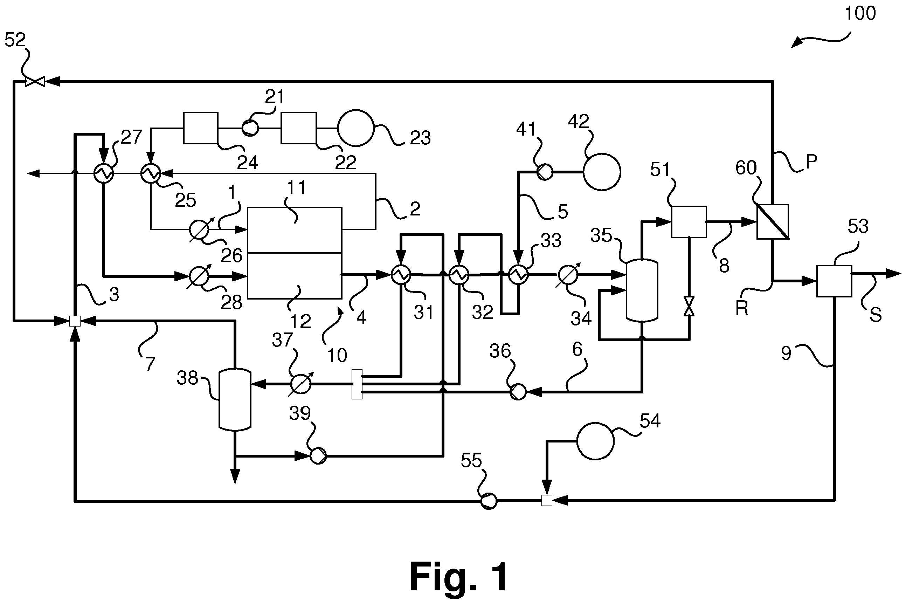

In Figur 1 ist eine Anlage gemäß einer besonders bevorzugten Ausführungsform der Erfindung veranschaulicht und insgesamt mit 100 bezeichnet.

Zentrale Komponente der Anlage 100 ist eine Festoxid- bzw. Hochtemperatur-Elektrolysezelle 10, die eine Anodenseite 11 und eine Kathodenseite 12 bzw. entsprechende anoden- und kathodenseitige Kammern aufweist.

Die Anodenseite 11 der Elektrolysezelle 10 wird mit Luft gespült, wozu mittels eines Verdichters 21 über ein Filter 22 Luft aus einem Luftvolumen 23 bzw. atmosphärische Luft angesaugt, mittels eines Trockners 24 getrocknet, mittels eines Wärmetauschers 25 und einer Heizeinrichtung 26 erwärmt und durch die Anodenseite 11 der Elektrolysezelle 10 geführt wird. Ein auf diese Weise bereitgestellter Luftstrom 1 spült die Anodenseite 11 der Elektrolysezelle 10 und führt dort gebildete Produkte, insbesondere Sauerstoff, ab. Nach seiner Verwendung wird der entsprechend angereicherte und nun mit 2 bezeichnete Luftstrom in dem Wärmetauscher 25 und einem weiteren Wärmetauscher 27 gekühlt. Der angereicherte Luftstrom 2 kann aus der Anlage 100 ausgeleitet werden.

Kathodenseitig wird ein zumindest Wasserdampf, Kohlendioxid und Wasserstoff umfassender Stoffstrom 3 durch die Elektrolysezelle 10 geführt. Der Stoffstrom 3 wird dabei in dem Wärmetauscher 27 und einer Heizeinrichtung 28 erwärmt.

Die Kathodenseite der Elektrolysezelle 10 verlässt ein Rohelektrolyseprodukt, welches, wie erläutert, Wasserdampf, Kohlendioxid, Kohlenmonoxid und Wasserstoff umfasst. Dieses wird in Form eines Stoffstroms 4 durch Wärmetauscher 31, 32, 33 geführt und in einer, beispielsweise mit Kühlwasser betriebenen, Kühleinrichtung 34 gekühlt. Die Wärmetauscher 32, 33 werden dabei von einem Wasserstrom 5 durchströmt, der mittels einer Pumpe 41 aus einem Wasservolumen 42 gefördert wird. Bei dem Wärmetauscher 31 handelt es sich um einen Dampferzeuger, der ähnlich ausgebildet sein kann, wie ein Dampferzeuger, der in bekannten Verfahren zur Damfreformierung im Synthesegasstrom eingesetzt wird. In den Wärmetauschern 32 und 33 kann Speisewasser angewärmt und ggfs auch teilverdampft werden. Teil des auf diese Weise ausgebildeten Dampferzeugungssystems ist eine Dampftrommel 38. Eine entsprechende Dampferzeugung in einem Dampfreformierungsverfahren ist beispielsweise in der DE 1 255 641 A1 A gezeigt.

Durch die erläuterte Abkühlung des Stoffstroms 4 kann aus diesem in einem Abscheidebehälter 35 Wasser abgeschieden werden, das in Form eines Stoffstroms 6 mittels einer Pumpe 36 abgezogen werden kann. Das Wasser des Stoffstroms 6 kann zusammen mit dem Wasser des Stoffstroms 5 in einer Heizeinrichtung 37 erwärmt werden. Das auf diese Weise zumindest teilweise verdampfende Wasser wird in die Dampftrommel 38 überführt. Dampf vom Kopf der Dampftrommel 38 kann in Form eines Dampfstroms 7 zur Bildung des Stoffstroms 3 verwendet werden.

In der Dampftrommel 38 flüssig vorliegendes Wasser kann in Form eines nicht gesondert bezeichneten Stoffstroms mittels einer Pumpe 39 unter teilweiser Verdampfung durch den Wärmetauscher 31 geführt und erneut der Erwärmung in der Heizeinrichtung 37 zugeführt werden. Weiteres abgeschiedenes Wasser kann in Form eines ebenfalls nicht gesondert bezeichneten Stoffstroms aus der Anlage 100 ausgeführt werden.

Das auf diese Weise bereits weitgehend von Wasser befreite Rohelektrolyseprodukt kann in Form eines nicht gesondert bezeichneten Stoffstroms vom Kopf des Abscheidebehälters 35 abgezogen und mittels eines Rohgasverdichters 51 einer Verdichtung unterworfen werden. Hierbei abgeschiedenes Kondensat kann, wie ebenfalls nicht gesondert mit einem Bezugszeichen angegeben, in den Abscheidebehälter 35 zurückgespeist werden. Das auf diese Weise verdichtete und aufbereitete Elektrolyserohprodukt kann in Form eines Stoffstroms 8 einer Membrantrennung 60 unterworfen werden.

Mit anderen Worten wird in der Anlage 100 der Elektrolysezelle 10 ein Rohelektrolyseprodukt in Form des Stoffstroms 4 gebildet, und ein aus dem Rohelektrolyseprodukt gebildetes Gasgemisch wird in Form des Stoffstroms 8 der Membrantrennung 60 unterworfen.

Mittels der Membrantrennung 60 wird ein hier mit P bezeichneter Permeatstrom und hier ein mit R bezeichneter Retentatstrom gebildet. Der Permeatstrom P ist dabei gegenüber dem der Membrantrennung 60 unterworfenen Gasgemisch an Wasserstoff an- und an Kohlenmonoxid abgereichert. Hingegen ist der Retentatstrom R gegenüber dem der Membrantrennung unterworfenen Gasgemisch an Wasserstoff ab- und an Kohlenmonoxid angereichert. Da in der hier veranschaulichten Ausgestaltung der Erfindung stromauf der Membrantrennung 60 kein Kohlendioxid abgetrennt wird, enthält das der Membrantrennung 60 unterworfene Gasgemisch auch Kohlendioxid. Wie erwähnt, ist aber auch eine Kohlendioxidentfernung stromauf der Membrantrennung 60 möglich.

Der Permeatstrom P wird über ein Ventil 52 zurückgeführt und bei der Bildung des Stoffstroms 3, also des der Kathodenseite 12 der Elektrolysezelle 10 zugeführten Gasgemischs, verwendet. Der Retentatstrom wird einer Kohlendioxidabtrennung 53 zugeführt, in welcher unter Abtrennung von Kohlendioxid, das in Form eines Stoffstroms 9 aus der Kohlendioxidabtrenneinheit 53 abgezogen werden kann, ein Gasprodukt gebildet wird, das zumindest Kohlenmonoxid und optional Wasserstoff enthält. Das Gasprodukt wird in Form eines Stoffstroms S ausgeführt.

Der Kohlendioxidstrom 9 kann, insbesondere nach Zugabe von weiterem Kohlendioxid aus einem entsprechenden Reservoir 54, insbesondere mittels eines Verdichters 55 zurückgeführt und bei der Bildung des der Kathodenseite 12 der Elektrolysezelle 10 zugeführten Gasgemischs bzw. des Stoffstroms 3 verwendet werden.

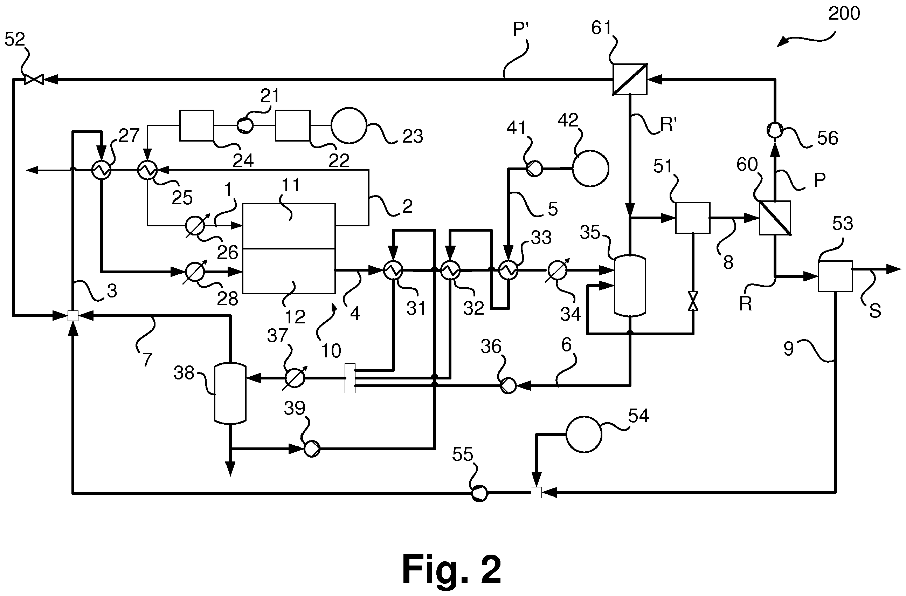

In Figur 2 ist eine Anlage einer weiteren Ausführungsform der Erfindung veranschaulicht und insgesamt mit 200 bezeichnet. Die Anlage 200 unterscheidet sich im Wesentlichen dadurch von der in Figur 1 veranschaulichten Anlage 100, dass eine weitere Membrantrennung 61 vorgesehen ist, welcher der Permeatstrom P aus der Membrantrennung 60 über einen Verdichter 56 zugeführt wird.

Wie erwähnt, ist der Permeatstrom P aus der Membrantrennung 60 gegenüber dem der Membrantrennung 60 zugeführten Gasgemisch, also hier Stoffstrom 8, an Wasserstoff angereichert und an Kohlenmonoxid abgereichert. Jedoch kann der Permeatstrom P noch nennenswerte Anteile an Kohlenmonoxid enthalten. Es kann daher vorteilhaft sein, den Gehalt an Kohlenmonoxid in dem Permeatstrom P weiter zu reduzieren, bevor dieser, wie hier in Form eines weiteren Permeatstroms P' veranschaulicht, über das Ventil 52 zurückgeführt und bei der Bildung des der Kathodenseite 12 der Elektrolysezelle 10 zugeführten Gasgemischs, also des Stoffstroms 3, verwendet wird. Auf diese Weise lassen sich, wie erwähnt, insbesondere Hochtemperaturkorrosionsprobleme in den zur Vorwärmung des Stoffstroms 3 verwendeten Apparaten, hier insbesondere dem Wärmetauscher 27 und der Heizeinrichtung 28, verhindern.

In der weiteren Membrantrennung 61 wird dabei ein gegenüber dem Permeatstrom P an Kohlenmonoxid abgereicherter Retentatstrom R' gebildet, der insbesondere in der dargestellten Weise dem Stoffstrom aus der Abscheidebehälter 35 zugespeist werden kann. Der weitere Permeatstrom P' aus der weiteren Membrantrennung 61 ist hingegen, wie bereits erläutert, an Kohlenmonoxid abgereichert und kann in der erläuterten Weise zurückgeführt werden.

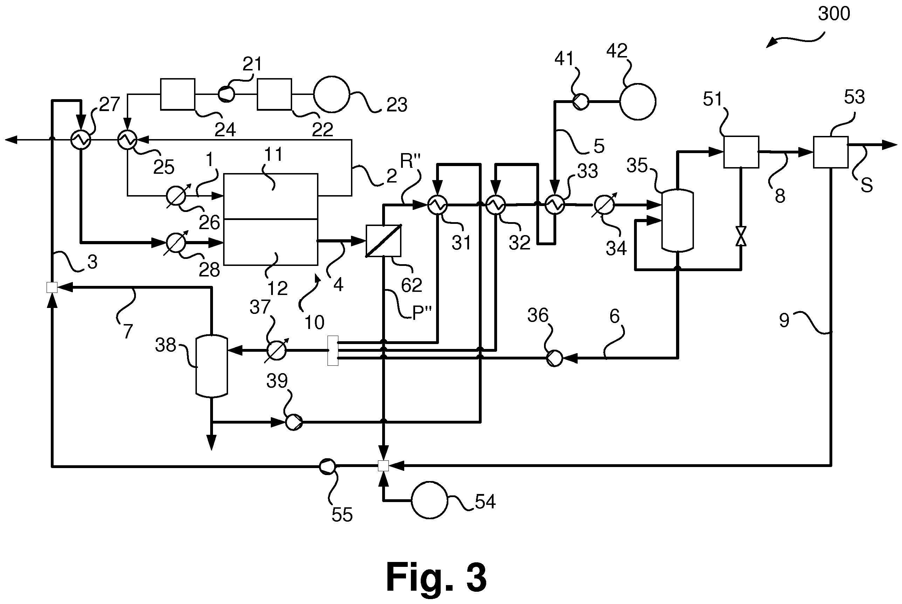

In Figur 3 ist eine Anlage gemäß einer weiteren Ausführungsform veranschaulicht und insgesamt mit 300 bezeichnet. Die Anlage 300 unterscheidet sich von den in den Figuren 1 und 2 veranschaulichten Anlagen 100 und 200 insbesondere dadurch, dass anstelle der dort in Form einer Niedertemperatur-Membrantrennung 60 bzw. 61 vorgesehenen Membrantrennung hier eine Hochtemperatur-Membrantrennung eingesetzt wird, die mit 62 bezeichnet ist.

Die Hochtemperatur-Membrantrennung 62 wird als Rohelektrolyseprodukt von der Kathodenseite 12 der Elektrolysezelle 10, und damit der Stoffstrom 4, insbesondere ohne vorherige Abkühlung zugeführt. In der Hochtemperatur-Membrantrennung 62 kann insbesondere ein überwiegend oder ausschließlich Wasserstoff enthaltender Permeatstrom, der hier mit P" bezeichnet ist, gebildet werden. Der entsprechende Retentatstrom R" ist demgemäß im Wesentlichen nur an Wasserstoff abgereichert und wird anschließend in bereits unter Bezugnahme auf die Anlagen 100 und 200 gemäß den Figuren 1 und 2 erläuterten Schritten der Wasser- und Kohlendioxidabtrennung unterworfen. Hierzu können dieselben Apparate wie in den zuvor erläuterten Anlagen eingesetzt werden. Der Permeatstrom P" aus der Hochtemperatur-Membrantrennung 62 wird dabei insbesondere mit einem Kohlendioxidstrom 9 aus der Kohlendioxidabtrenneinheit 53 zusammengeführt sowie mit weiterem Kohlendioxid aus dem Reservoir 54, bevor ein entsprechend gebildeter Sammelstrom 55 bei der Bildung des der Kathodenseite 12 der Elektrolysezelle 10 zugeführten Gasgemischs, und damit des Stoffstroms 3, verwendet wird.

Bei der in Figur 3 veranschaulichten Anlage 300 ist insbesondere ein erhöhter Elektrolysedruck erforderlich, um den erforderlichen Wasserstoff-Partialdruckunterschied als Triebkraft der Membrantrennung zu gewährleisten. Zur Anpassung der Temperaturniveaus der Hochtemperatur-Elektrolyse und der Hochtemperatur-Membrantrennung kann erstere entweder auf niedrigere Temperatur von beispielsweise 700°C durchgeführt werden oder es kann, zusätzlich zu den in Figur 3 veranschaulichten Maßnahmen, eine zusätzliche Kühlung des Rohelektrolyseprodukts und damit des Stoffstroms 4 vorgenommen werden.

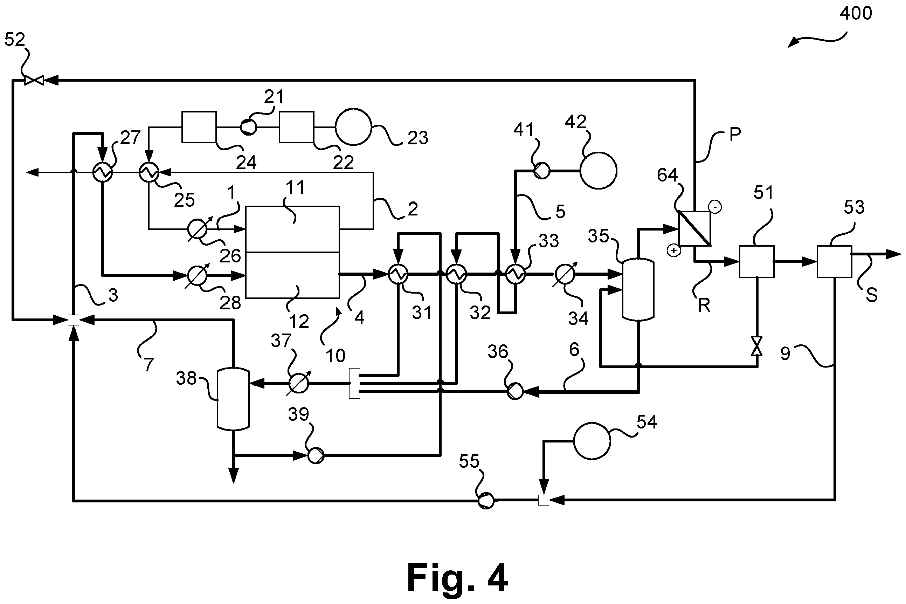

In Figur 4 ist eine weitere Anlage gemäß einer Ausführungsform der Erfindung veranschaulicht und insbesondere mit 400 bezeichnet. Die in Figur 4 veranschaulichte Anlage 400 unterscheidet sich von den zuvor unter Bezugnahme auf die Figuren 1, 2 und 3 erläuterten Anlagen 100, 200 und 300 im Wesentlichen dadurch, dass eine Membrantrennung 64 vorgesehen ist, die unter Verwendung einer protonenleitenden Membran durchgeführt wird. Da bei dieser Variante die Triebkraft der Membrantrennung durch ein elektrisches Potential anstellte eines Partialdruckunterschieds erreicht wird, kann die Trennung hier stromauf des Rohgasverdichters 51 erfolgen. Alternativ dazu kann die Membrantrennung 64 jedoch auch stromab des Rohgasverdichters 51 erfolgen.

## Patentansprüche

1. Verfahren (100, 200, 300, 400) zur Herstellung eines zumindest Kohlenmonoxid enthaltenden Gasprodukts (S), bei dem ein zumindest Kohlendioxid, Wasser und Wasserstoff enthaltender Elektrolyseeinsatz gebildet und einer Kathodenseite (12) einer Hochtemperatur-Elektrolysezelle (10) zugeführt wird, und bei dem von der Kathodenseite (12) der Hochtemperatur-Elektrolysezelle (10) ein zumindest Wasser, Kohlendioxid, Kohlenmonoxid und Wasserstoff enthaltendes Elektrolyserohprodukt abgeführt wird, **dadurch gekennzeichnet, dass** zumindest ein Teil des Elektrolyserohprodukts oder ein unter Verwendung zumindest eines Teils des Elektrolyserohprodukts gebildetes und zumindest Kohlenmonoxid und Wasserstoff enthaltendes Gasgemischs als ein Trenneinsatz einer Membrantrennung (60, 62, 64) unterworfen wird, in der ein gegenüber dem Trenneinsatz an Wasserstoff an- und an Kohlenmonoxid abgereichertes Permeat und ein an Wasserstoff ab- und an Kohlenmonoxid angereichertes Retentat gebildet werden, wobei zumindest ein Teil des Permeats oder ein unter Verwendung zumindest eines Teils des Permeats gebildetes Gasgemisch bei der Bildung des Elektrolyseeinsatzes verwendet wird.

2. Verfahren nach Anspruch 1, bei dem die Bildung des Gasgemischs, das als Trenneinsatz der Membrantrennung (60, 62, 64) unterworfen wird, eine zumindest teilweise Abtrennung von Kohlendioxid aus dem Elektrolyserohprodukt oder einem Teil hiervon umfasst, oder bei dem der Trenneinsatz Kohlendioxid enthält.

3. Verfahren nach Anspruch 1 oder 2, bei dem die Membrantrennung (60) auf einem Temperaturniveau von weniger als 100 °C betrieben wird, und bei dem der der Membrantrennung zugeführte Trenneinsatz unter Verwendung zumindest eines Teils des Elektrolyserohprodukts gebildet wird, das einer Abkühlung und zumindest teilweisen Entfernung von Wasser unterworfen wird.

4. Verfahren nach Anspruch 3, bei dem eine Membrantrennung (60) verwendet wird, deren Triebkraft überwiegend oder ausschließlich durch ein Partialdruckgefälle über eine oder mehrere in der Membrantrennung (60) eingesetzte Membranen eingestellt wird, wobei das Bilden des der Membrantrennung zugeführten Trenneinsatzes eine Verdichtung auf ein Druckniveau von 5 bis 50 bar umfasst.

5. Verfahren nach Anspruch 3, bei dem eine Membrantrennung (60) verwendet wird, deren Triebkraft überwiegend oder ausschließlich durch ein elektrisches Spannungsgefälle über eine oder mehrere in der Membrantrennung (60) eingesetzte Membranen eingestellt wird, wobei der Trenneinsatz der Membrantrennung auf einem Druckniveau von 1 bis 50 bar zugeführt wird.

6. Verfahren nach einem der Ansprüche 3 bis 5, bei dem das Permeat Kohlenmonoxid enthält, und bei dem zumindest ein Teil des Permeats oder ein unter Verwendung zumindest eines Teils des Permeats gebildetes Gasgemisch als weiterer Trenneinsatz einer weiteren Membrantrennung unterworfen wird.

7. Verfahren nach Anspruch 6, bei dem in der weiteren Membrantrennung ein weiteres Permeat und ein weiteres Retentat gebildet werden, wobei das weitere Permeat gegenüber dem weiteren Trenneinsatz an Kohlenmonoxid abgereichert ist und wobei zumindest ein Teil des weiteren Permeats oder ein unter Verwendung zumindest eines Teils des weiteren Permeats gebildetes Gasgemisch bei der Bildung des Elektrolyseeinsatzes verwendet wird.

8. Verfahren nach Anspruch 1 oder 2, bei dem die Membrantrennung (60) auf einem ersten Temperaturniveau von mehr als 200 °C betrieben wird, wobei die Hochtemperatur-Elektrolysezelle (10) auf dem ersten Temperaturniveau betrieben wird, oder wobei die Hochtemperatur-Elektrolysezelle (10) auf einem zweiten Temperaturniveau oberhalb des ersten Temperaturniveaus betrieben wird und das Elektrolyserohprodukt auf das erste Temperaturniveau abgekühlt wird.

9. Verfahren nach Anspruch 8, bei dem das Retentat einer Abkühlung und Entfernung von Wasser unterworfen wird.

10. Verfahren nach einem der Ansprüche 3 bis 7 oder 9, bei dem die Abkühlung und die Entfernung von Wasser die Verwendung eines Wärmetauschers umfasst, dem zur Bereitstellung von Dampf ein Wasser- oder Dampfstrom zugeführt wird.

11. Verfahren nach einem der vorstehenden Ansprüche, bei dem das Retentat Kohlendioxid enthält, wobei aus zumindest einem Teil des Retentats Kohlendioxid abgetrennt und zumindest teilweise bei der Bereitstellung des Elektrolyseeinsatzes verwendet wird.

12. Anlage zur Herstellung eines zumindest Kohlenmonoxid enthaltenden Gasprodukts (S), mit einer Hochtemperatur-Elektrolysezelle (10), Mitteln, die dafür eingerichtet sind, einen zumindest Kohlendioxid, Wasser und Wasserstoff enthaltenden Elektrolyseeinsatz zu bilden und einer Kathodenseite (12) einer Hochtemperatur-Elektrolysezelle (10) zuzuführen, und Mitteln, die dafür eingerichtet sind, von der Kathodenseite (12) der Hochtemperatur-Elektrolysezelle ein zumindest Wasser, Kohlendioxid, Kohlenmonoxid und Wasserstoff enthaltendes Elektrolyserohprodukt abzuführen, **dadurch gekennzeichnet, dass** Mittel bereitgestellt sind, die dafür eingerichtet sind, zumindest einen Teil des Elektrolyserohprodukts oder ein unter Verwendung zumindest eines Teils des Elektrolyserohprodukts gebildetes und zumindest Kohlenmonoxid und Wasserstoff enthaltendes Gasgemischs als Trenneinsatz einer Membrantrennung (60, 62, 64) zu unterwerfen, in der ein gegenüber dem Trenneinsatz an Wasserstoff an- und an Kohlenmonoxid abgereichertes Permeat und ein an Wasserstoff ab- und an Kohlenmonoxid angereichertes Retentat gebildet werden, und dass Mittel bereitgestellt sind, die dafür eingerichtet sind, zumindest einen Teil des Permeats oder ein unter Verwendung zumindest eines Teils des Permeats gebildetes Gasgemisch bei der Bildung des Elektrolyseeinsatzes zu verwenden.

13. Anlage nach Anspruch 12, die zur Durchführung eines Verfahrens nach einem der Ansprüche 1 bis 11 eingerichtet ist.
